# EUROPEAN PATENT SPECIFICATION

(11) **EP 1 470 163 B1**
(45) Date of publication and mention of the grant of the patent: **28.12.2005**
(21) Application number: 03704483.1
(22) Date of filing: 28.01.2003
(51) Int. Cl.: C08B 37/00

(54) **POLYSACCHARIDE ESTERS AND THEIR USE AS BINDERS IN COATINGS**
POLYSACCHARIDESTER UND IHRE VERWENDUNG ALS LACKBINDEMITTEL
ESTERS DE POLYSACCHARIDE ET UTILISATION DE CEUX-CI EN TANT QUE LIANTS DANS DES ENDUITS

(30) Priority: 30.01.2002 EP 02447016
(43) Date of publication of application: 27.10.2004
(73) Proprietor: SIGMA COATINGS B.V., 1422 AD Uithoorn (NL)
(72) Inventor: Oostveen, Everardus A., p/a Ato Business Unit, NL-6700 AA Wageningen (NL); WEIJNEN, John, NL-2408 NT Alphen aan den Rijn (NL); Van Haveren, Jacco, p/a Ato Business Unit, NL-6700 AA Wageningen (NL); GILLARD, Michel, B-1348 Louvain-La-Neuve (BE)
(74) Representative: Brants, Johan P.E.
(86) International application number: PCT/EP2003/000845
(87) International publication number: WO 2003/064477

(56) References cited:
- WO-A-99/48946
- US-A- 2 970 142
- US-A- 3 951 945
- US-A- 3 996 206
- US-A- 5 877 144
- PATENT ABSTRACTS OF JAPAN vol. 15, no. 461 (C-887), 22 November 1991 (1991-11-22) & JP 03 197409 A (KOBAYASHI KOSE), 28 August 1991 (1991-08-28) & DATABASE WPI Week 199141 Derwent Publications Ltd., London, GB; AN 1991-298725
- DATABASE WPI Week 200235 Derwent Publications Ltd., London, GB; AN 2002-313612 XP002242462 KIM H S: "Preparation Methyl Fructoside Oleic Acid Polyester" & KR 2001 068 972 A (DAN SUK IND CO LTD), 23 July 2001 (2001-07-23)

## Description

### FIELD OF THE INVENTION

The present invention relates to air-drying varnish or paint compositions. More particularly, the present invention relates to polyesters prepared from renewable materials and their use as binders in said air-drying varnish or paint composition. The present invention further relates to methods for the preparation of said polyesters and to air-drying varnish or paint compositions comprising said polyesters.

### BACKGROUND OF THE INVENTION

Conventional air-drying paint composition may comprise alkyd oligomers as binders. These alkyds used in coating formulations suitable for application at ambient temperatures are synthesised by a polycondensation reaction of polycarboxylic acids, polyhydric alcohols and unsaturated fatty acids or oils. Highly suitable polycarboxylic acids, are for instance, phthalic acid(anhydride), isophthalic acid, terephthalic acid, trimellitic acid, pyromellitic acid, adipic acid, sebacic acid, maleic acid, fumaric acid, succinic acid, glutaric acid and tetrahydrophthalic acid(anhydride). The polyalcohols habitually used in the alkyd synthesis are amongst others: pentaerythritol, dipentaerythritol, glycerol, ethylene glycol, diethylene glycol, propylene glycol, neopentyl glycol, trimethylol propane, trimethylol ethane, di-trimethylol propane and 1,6 hexane diol. The majority of the aforementioned polyacids and polyalcohols are alkyd building blocks derived from petrochemical feedstocks. Other modifying components, which may be optionally included in the manufacture of air-drying alkyd resins are: isocyanates as toluene diisocyanate, isophorone diisocyanate and hexamethylene diisocyanate, benzoic acid, abietic acid, phenolic resins, siloxanes, and vinyl monomers such as styrene, vinyl toluene alkyl and (meth)acrylates. Glycerol and the diacids, adipic acid, sebacic acid, maleic acid, fumaric acid, succinic acid and glutaric acid and abietic acid are obtainable from renewable sources but led to alkyd paints with insufficient hardness development and low solids content.

Other type of alkyd like compounds have been synthesised: EP-A-792888 discloses esters of inulin wherein at least one of the inulin hydroxyl groups is esterified with a saturated C₂-C₂₂ carboxylic acid, and their use as surface-active substances. Claimed preparation of such esters is by reaction of inulin with: (a) the acid chloride or anhydride using pyridine as the sole solvent; (b) the acid anhydride using water as the sole solvent or using no solvent; or (c) an ester of the acid using a catalyst but no solvent. The same or a mixture of acids can be used to esterify the OH groups, with the degree of substitution (DS) being 1, preferably 0.5. The products are claimed in aqueous solution or powder form. GB-A-2337950 discloses antifouling coating compositions containing a non-drying polysaccharide ester as film-forming binder. WO-A-9422919 discloses the uses of fatty acid esters of polysaccharides as a component of a hot melt adhesive and as a coating for active ingredients such as fertilisers.

WO-A-9948946 discloses polyol fatty acid polyesters obtained by reacting unesterified first polyol having hydroxy groups with second polyol esterified with fatty acids, such as triglycerides.

It is a main object of the present invention to provide novel polyesters prepared from renewable materials and useful as binders. It is another object to provide air-drying paint or varnish compositions comprising said binders. A further object of the present invention is to provide film-forming paints or varnishes completely derivable from agricultural and renewable sources. It is yet another object to provide paints or varnishes with one or more of the following properties, a reduced intrinsic viscosity or fast drying characteristics or high-quality film properties such as limited yellowing, no wrinkling when applied in thick layers, elasticity, and transparency.

### SUMMARY OF THE INVENTION

At least one or more of the above-cited objects is met by the coating compositions of the present invention. The air-drying paint and varnish compositions of the present invention are based on binders that can be prepared from renewable materials. They are characterised in that said binders essentially consist of polyesters that can be obtained by transesterification or interesterification of inulin or an acyl ester thereof, and a drying oil, a semi-drying oil or derived alkyl esters thereof.

More in particular the present invention relates to polyesters according to claims 1-5.

The present invention also comprises methods for the preparation of said polyesters according to claims 6-11 and to the use of said polyesters as binders in coatings. The invention also comprises said binders and their use in air-drying paint or varnish compositions.

### DETAILED DESCRIPTION

The term "acyl" as used herein, refers to an alkyl group attached to a carbon-oxygen double bond. More in particular acyl as used herein refers to a radical of formula R¹CO- wherein R¹ represents an alkyl.

The term "alkyl" as-used herein, alone or in combination, means straight and branched chained saturated hydrocarbon radicals containing from 1 to 6 carbon atoms, preferably from 1 to 4 carbon atoms, more preferably 1 to 2 carbon atoms. Examples of such radicals include methyl, ethyl, n-propyl, isopropyl n-butyl, isobutyl, sec-butyl, tert-butyl, 2-methylbutyl and the like.

According to an embodiment, said acyl ester of inulin is a lower acyl ester, wherein "lower" as used herein refers to C₁₋₄ carbon atoms. Suitable acyl esters of inulin are acetate ester, propionate ester and the like.

According to another embodiment, said derived alkyl ester of drying or semi-drying oil relates to short chain alkyl ester of fatty acids, wherein "short-chain" as used herein refers to C₁₋₆ carbon atoms. Suitable short chain alkyl ester of said fatty acids are methyl ester, ethyl ester and the like.

According to an embodiment, the present invention relates to polyesters obtainable by interesterification of (i) an acyl ester of inulin of general formula G(F)ₙ wherein G represents a glucose moiety, F represents a fructose moiety, and n is at least 2, and (ii) a drying oil, a semi-drying oil or derived alkyl esters thereof.

According to another embodiment, the present invention relates to polyesters obtainable by transesterification of (i) inulin of general formula G(F)ₙ wherein G represents a glucose moiety, F represents a fructose moiety, and n is at least 2, and (ii) C₁₋₆ alkyl ester of unsaturated fatty acids.

The polyesters according to the invention may have an average degree of substitution ranging from 0.2 to 3.0 wherein the degree of substitution is the average number of substituted OH functions per monosaccharide unit generally determined using ¹³C-NMR. According to another embodiment, the polyester may have a degree of substitution ranging from 0.5 to 2.5 or for example from 1.0 to 2.0.

The polyesters of the present invention are obtained by transesterification of:
(i) inulin and
(ii) C₁₋₆ alkyl ester of unsaturated fatty acids,
or by interesterification of:
(i) inulin acyl ester, and
(ii) a drying oil, or a semi-drying oil
wherein inulin is of general formula G(F)n, wherein G represents a glucose moiety, F represents a fructose moiety and n is at least 2.

Inulin is a polymer of (2->1)-β-D-fructofuranan with a terminal α-D-glucopyranosyl group. Inulin is often summarised as G(F)ₙ, wherein G represents a glucose moiety, F represents a fructose moiety, according to an embodiment n varies from 2 to 60. Industrially, inulin is used primarily in the food sector for such purposes as the production of diabetic bread and fructose syrup.

Inulin is a very widespread carbohydrate in nature and occurs in composites, such as chicories, Jerusalem artichoke, dahlias and artichokes as well as in other types of plants, in which it serves as a storage material. It is isolated in economically significant amounts from chicory (Cichorium intybus) and Jerusalem artichokes. Depending on the type of plant and on the harvesting time, inulin has different molecular weight distributions and different average chain lengths between 8 and 25. The size of individual molecules ranges, in general, from 5 to 50 monosaccharide units per chain. There are, however, native inulins having an average chain length greater than 25 and correspondingly longer individual chains. Sucrose can also be the raw material for enzymatic production of short chain inulin. The enzyme takes a fructose unit from a sucrose molecule and transfers it to another sucrose molecule to make oligomers such as kestose (GF₂), nystose (GF₃) fructofuranosyl nystose (GF₄).

The inulin or the acyl ester thereof selected for use in the preparation of the polyesters according to the invention may have a narrow molecular weight distribution, characterised by a polydispersity of maximum 10. For example the polydispersity can be lower than 2, or lower than 1.5, preferably lower than 1.3. Polydispersity is defined as the ratio of the weight-average molecular weight to the number-average molecular weight; it is generally determined using size exclusion chromatography (SEC).

The drying oil, semi-drying oil or derived alkyl esters thereof, used in the preparation of the polyesters according to the invention can be appropriately selected to impart air-drying properties to the binders and hence to the paint or varnish compositions based on said binders. Drying and semi-drying oils are mixtures of saturated, mono, di, tri-unsaturated fatty acids triglycerides, more in particular they are triglycerides of unsaturated long chain carboxylic acids, which have usually at least 10 carbon atoms, typically about 10 to about 24, preferably about 16 to 22 atoms and most preferably about 18 to 20 carbon atoms. By semi-drying and drying fatty acids is meant fatty acids that have the same aliphatic chain composition as the oils they are derived from. The classification of the oils is based on the iodine number; for drying oil the iodine number is >140; for semi-drying oil the iodine number is ranging between 125 and 140, and for non-drying oil the iodine number is <125 ("Surface Coatings", by Swaraj Paul, John Wiley and Sons; p.89).

The unsaturated fatty acids encountered in these drying or semi-drying oils may have an iodine number of at least 100 expressed in terms of the number of centigrams of iodine per gram of fatty acids (e.g. ASTM test method D-1959). According to an embodiment, said fatty acids have an iodine number ranging between 100 and 140. For example, said fatty acids may have an iodine number greater than 125 (semi-drying) or 140 (drying). Typical but non-limiting examples of unsaturated fatty acids useful in the present invention are: safflower fatty acid, tall oil fatty acid, rapeseed oil fatty acid, peanut oil fatty acid, soya bean oil fatty acid, linseed oil fatty acid, sardine oil fatty acid, herring oil fatty acid, tallow oil fatty acid, sunflower oil fatty acid, cottonseed oil fatty acid, and mixtures thereof. Various drying and semi-drying oils and the properties of such oils are reviewed in Surface Coatings", by Swaraj Paul, John Wiley and Sons, incorporated herein by reference.

The present invention also relates to method for the preparation of a polyester according to the invention, comprising the steps of transesterification of:
(i) inulin and
(ii) C₁₋₆ alkyl ester of unsaturated fatty acids,
or interesterification of:
(i) inulin acyl ester, and
(ii) a drying oil, or a semi-drying oil
wherein inulin is of general formula G(F)n, wherein G represents a glucose moiety, represents a fructose moiety, and n is at least 2.

According to an embodiment, the present invention relates to a method for the preparation of a polyester according to the invention comprising the step of interesterification of (i) an acyl ester of inulin of general formula G(F)ₙ wherein G represents a glucose moiety, F represents a fructose moiety and n is at least 2, and (ii) a drying oil, a semi-drying oil or derived alkyl esters thereof.

According to yet another embodiment, the present invention relates to a method for the preparation of a polyester according to the invention, comprising the step of transesterification of (i) inulin of general formula G(F)ₙ wherein G represents a glucose moiety, F represents a fructose moiety and n is at least 2, and (ii) C₁₋₆ alkyl ester of unsaturated fatty acids.

In case of partial esterification (e.g. resins with a degree of substitution less than 3.0) the amount of free residual hydroxyl groups can be diminished by an additional reaction with for example acetic anhydride.

In a further embodiment, ,the inulin may be optionally acylated prior to reaction with a drying oil, or a semi-drying oil or derived alkyl esters thereof.

The transesterification or interesterification reaction may be carried out by reacting the inulin or lower acyl ester of inulin and the oil or derived lower alkyl esters at a temperature of 120 to 170 °C for 4 to 24 hours. According to an embodiment, the interesterification or transesterification reaction may be carried out in the presence of a polar aprotic solvent. According to another embodiment, said reaction is performed in an inert atmosphere and optionally under reduced pressure.

Suitable catalysts for performing said reaction include but are not limited to K₂CO₃, Na₂CO₃, LiOH and NaOMe. The inulin:oil ratio is adapted to obtain the desired degree of substitution. If needed, hydrogen peroxide can be used to bleach the resulting product at a temperature of 25 to 40°C.

The free hydroxyl groups of the polyesters obtained through the transesterification procedure may be acylated by a low molecular weight acid derivative such as acetic anhydride.

The polyesters of this invention exhibit a narrow molecular weight distribution. A low polydispersity of the polyester is favourable for a low intrinsic polyester viscosity and consequently only a limited amount of cutting solvent is required to obtain a practical processing viscosity. Typical amounts of organic solvent to dilute the polyester binder are less than about 40 weight %, preferably less than about 15% and more preferably less than about 10%. Suitable organic solvents to dilute the polyester binders of the invention include aliphatic, cycloaliphatic and aromatic hydrocarbons, alcohol ethers, alcohol ether esters and N-methylpyrrolidone. However, it may also be an aqueous carrier containing the polyester in the form of an emulsion and a suitable emulsifier as is well known in the art.

An additional advantage of a narrow molecular weight distribution is that after curing a homogeneously cross-linked polymeric network is obtained with improved overall film properties as high elasticity.

The polyesters of this invention find particular use as binders in coating compositions, especially in high solids coating compositions. More in particular, the polyesters according to the invention can be used as binders in paints and varnishes.

The polyesters may be formulated into coating compositions such as varnish or paint. The paints may optionally comprise various pigments, extenders, corrective and constructive additives and liquid carriers. The varnishes may optionally comprise extenders, corrective and constructive additives and liquid carriers. Non-limiting examples of such materials include: inorganic and organic pigments, siccatives, anti-skinning agents, pigment and substrate wetting agents, anti-sagging agents, anti-oxidants, bactericides, fungicides, foam suppressing agents, slip agents, flow and levelling agents, UV-absorbers, HALS-radical scavengers, corrosion inhibitors, waxes, anti-crater additives, organic solvents and water.

The present invention further relates to air-drying paint or varnish composition comprising as a binder a polyester according to the invention and at least one drier.

The cure process in air-drying involves oxidation, i.e. reaction with oxygen from the air. It is always performed in the presence of a drier, also known as a catalyst, which is usually a combination of metal salts. Suitable autoxidation catalysts, which are also called driers or siccatives, are carboxylates or alkoxylates of alkali, alkali-earth, transition and rare earth metals. Typical examples are metal salts in which the anion is, for example, naphtenic acid, 2-ethyl-hexanoic acid, neodecanoic acid, decanoic acid, dodecanoic acid, isocarboxylic acid, sebacic and linolenic acid. Cobalt, manganese, iron, lead, zirconium, strontium, aluminium, cerium, vanadium, silver, titanium, calcium, barium, bismuth, zinc, lithium and potassium may be mentioned as suitable metals. Typically, mixtures of metal salts are used as for the autoxidation of alkyd resins, where at least one of the metals exhibits more than one oxidation number. Other examples of driers include inorganic or organic metal compounds, such as oxides, hydroxides, phosphates, carbonates, sulphates, sebacates, including neutral, acid or basic metal soaps. In terms of their metal content, the driers are used in a proportion ranging from 10⁻³ to 4% by weight, relative to the binder solids content.

Preferred compositions of the invention are high-solids formulations and preferable have a solids content between about 70 and about 90% and more preferably between about 80 and about 90%. The organic solvent is typically present at such an amount as to keep the volatile organic compound content below about 350 g/L, preferably below about 250 g/L and most preferable below 210 g/L.

The paint compositions according to the invention are particularly suitable for use as decorative paints. They can, be applied,in adequately high layer thickness and they have good hiding power and drying properties.

Carbohydrate esters of drying fatty acids, wherein the carbohydrate moiety is derived from oligomeric dextrines, however, cannot be prepared by the methods described in this invention, but only by reaction of the carbohydrate with fatty acid chlorides or anhydrides (as described in WO 94/22919). The fast drying binders thus obtained exhibit broader molecular weight distributions and much higher viscosity numbers than the inulin esters of the present invention with corresponding degrees of polymerisation. Furthermore it was found that esters of drying fatty esters with oligomeric dextrines, with a degree of substitution less than 2.5 are unsuitable as binder for alkyd paints, because they cannot be processed in the conventional way.

The invention is illustrated by the following representative, though non-limiting, examples.

### EXAMPLES

### Test methods employed

The following properties have been measured for some or all paint exemplified hereafter:
The low shear paint viscosity was measured with a HAAKE VT500 viscosimeter using a cylindrically shaped e E30 spindle at rotation speed of 179 rpm and at 23 °C.
High shear paint viscosity was measured in accordance with the ICI cone & plate method (ASTM D 4287) at a shear rate of 10000 s⁻¹ in dPa.s.
The solids content and VOC level of the formulations are calculated from the percentage solids material of the distinct components and the specific gravity of the solvent used.
The drying stages of the paint formulations were assessed using a BK-drying recorder (Sheen instruments Ltd). A 150 *µ*m wet paint layer is applied on a glass strip 30.5 x 2.5 cm. A vertical blunt needle is positioned into the freshly applied film by a 5 g load and then dragged through the drying paint at a speed of 24.4 mm/h in a direction parallel to the length of the coat.
Wrinkling was determined by visual evaluation of the dried film subsequent to applying a wet layer thickness of 300 µm on glass panels. Results are reported according to the "Sigma scale" were 0 indicates a completely smooth film and 5 means severe wrinkling over the total film surface.
The elasticity of the paint film is assessed using the Erichsen cupping test according to ISO 1520. Using a mechanically driven indenter and a lens, the depth of indentation at which the coating starts to crack is established.
The film hardness was established by determining the ease of rupture of the paint film by fingernails after 1 day and 14 days of curing.
The gloss level of a paint film was measured after 24 hours of drying with a Dr. Lange Refo 3 reflectometer in accordance with ISO 2813.
The levelling rating was appraised by the extent of fading of the brush marks upon application and the smoothness of the dried surface. The levelling rating is established by means of a notation scale, from 1 (good levelling) to 5 (poor levelling).
To evaluate the yellowing tendency of the formulations, an accelerated method is used which is described in the *American Paint & Coating Journal, January 17, 1994, page 44.* The whiteness of a paint film is measured by using the Friele algorithm, before and after 6 hours of exposition to an ammonia atmosphere.
The adhesion of the paint films on spruce and aged alkyds was determined according to the cross-hatch method (ISO 2409) and the cross cut test (ASTM D3359). On the substrates, a 100 µm thick wet paint film was applied and dried for 1 week under ambient conditions. After 1 week, incisions in the film were made and the adhesion was tested by the tape pull-off method. The adhesion rating is established by means of a notation scale, from 0 (very good adhesion) to 5 (poor adhesion).
The gloss retention of the paint films under conditions of artificially accelerated weathering was established in a QUV-A cabinet (QUV Q-Panel) according to ASTM G 53. The paint was applied on aluminium Q-panel, aged for 3 weeks under ambient conditions and afterwards exposed to a cycle of 4 hours UV-A light and 4 hours of condensation with demineralised water in the absence of UV-light. The gloss readings at angle 60 ° were monitored for at least 6 weeks, and are presented in table 3.
For relative properties, a notation scale was used, from 1 (good) to 5 (bad).

### Analytical methods employed:

The molecular weight distribution was determined by Gel Permeation Chromatography (GPC apparatus from Millipore) using THF as solvent, 3 columns of Plgel 5mm, mixed-D from Polymer laboratories, calibration curve with commercial polystyrene standards.

The acid value was measured according to ASTM method D 1980-87 and the value is expressed in mg KOH/g

The hydroxyl value was measured according to ASTM method D 1957-86 and the value is expressed in mg KOH/g

The degree of substitution (DS) is the sucrose functionalities which are substituted; it was established by quantitative ¹³C NMR, using a Bruker DPX 300 spectrometer.

The degree of polymerisation (DP) is number of monosaccharide units; it was determined by HPLC using a DIONEX unit.

Unless specified, all reactants are commercially available from Acros Organics or Merck.

### Example 1

### a. Preparation of inulin acetate

In a suitable reactor, the following were added:
1500 parts by weight (pbw) of N,N-dimethylacetamide;
400 pbw of inulin (commercially available as Raftiline HP, Orafti) having the following properties:
polydispersity: 1.1;
DP = 20.3
24.6 pbw of sodium acetate.
306 pbw of acetic anhydride

The mixture was heated at a temperature of 70-75 °C under a stream of nitrogen. At that temperature 306 pbw of acetic anhydride was added. Heating was continued for an additional period of 4 hours. Then, after cooling, the volatiles were evaporated under reduced pressure (20 Pa). Thereupon traces of the remaining acetic acid were removed by codistillation under reduced pressure with consecutively toluene and ethanol. The resulting crude (containing about 20% of N,N-dimethylacetamide) product [inulin acetate with a degree of substitution (DS) of about 1.3] was used in the next step without further purification.

### b. Preparation of Binder 1

In a suitable reactor, the following were added:
2580 pbw of N,N-dimethylacetamide;
646 pbw of the crude inulin acetate
788 pbw of sunflower oil, from Burg
67.8 pbw of potassium carbonate.

The mixture was heated at a temperature of 140-142 °C under a stream of nitrogen for 8 hours. Then, the solvent was distilled off under reduce pressure (20 Pa). The residue thus obtained was dissolved in petroleum ether (boiling range: 40-60°C) and treated with one equivalent hydrogen peroxide (2 % aqueous solution; 1 mol per mol of monosaccharide unit) during one hour at a temperature of 25-30°C.

The resulting binder had the following properties:
degree of substitution (linoleate): 0.6
degree of substitution (acetate): 0.9
polydispersity: 1.1
number-average molecular weight: 7.1 x 10³
viscosity of a 160 wt% solution in white spirit: 90 dPa.s at 23°C.

### c. Preparation and properties of paint based on Binder 1.

The paint formulations were produced in the usual manner. The coating ingredients were mixed, dispersed using a high-speed dissolver followed by pearl mill grinding. This formulation and the following paint compositions are described in Table 1. Properties of the paint have been established and are presented in Table 2.

### Example 2

### a. Preparation of inulin acetate

In a suitable reactor, the following were added:
375 pbw of N,N-dimethylacetamide;
100 pbw of inulin (Raftiline HP, from Orafti);
6.15 pbw of sodium acetate.
55.1 pbw of acetic anhydride

The mixture was heated at a temperature of 70-75°C under a stream of nitrogen. At that temperature 55.1 pbw of acetic anhydride was added. Heating was continued for an additional period of 4 hours. Then, after cooling, the volatiles were evaporated under reduced pressure (20 Pa). Thereupon traces of the remaining acetic acid were removed by co-distillation under reduced pressure with consecutively toluene and ethanol. The resulting crude (containing about 20 % of N,N-dimethylacetamide) product [inuline acetate with a degree of substitution of about 0.9] was used in the next step without further purification.

### b. Preparation of Binder 2

In a suitable reactor, the following were added:
560 pbw of N,N-dimethylacetamide;
154 pbw of the crude inulin acetate;
268 pbw of sunflower oil;
24.9 pbw of potassium carbonate.

The mixture was heated at a temperature of 140-142°C under a stream of nitrogen for 8 hours. Then, the solvent was distilled off under reduce pressure (20 Pa). The residue thus obtained was dissolved in petroleum ether (boiling range: 40-60°C) and treated with one equivalent hydrogen peroxide (2 % aqueous solution; 1 mol per mol of monosaccharide unit) during one hour at a temperature of 25-30°C.

The resulting binder had the following properties:
degree of substitution (linoleate): 0.6
degree of substitution (acetate): 0.5
polydispersity: 1.1
number-average molecular weight: 6.6 x 10³
viscosity of a 85 wt % solution in white spirit: 27 dPa.s at 23°C.

### c. Preparation and properties of paint based on Binder 2

Paint based on Binder 2 was prepared as in example 1. The paint composition is presented in Table 1. Properties of the paint have been established and are indicated in Table 2.

### Example 3

### a. Preparation of Binder 3

In a suitable reactor, the following were added:
1500 parts by weight (pbw) of N,N-dimethylacetamide;
93.7 pbw of inulin (Raftlin HP);
270 pbw of safflower FAME (Radia 30139, from Oleon) (FAME: fatty acid methyl ester);
15.2 pbw of potassium carbonate.

The mixture was heated at a temperature of 160-165°C under a stream of nitrogen. After 6 hours, the solvent and any remaining methanol were distilled under reduced pressure. The resulting product was dissolved in petroleum ether (boiling point: 40-60°C) and treated with one equivalent hydrogen peroxide (2 % aqueous solution; 1 mol per mol of monosaccharide unit) during 40 minutes at a temperature of 35°C.

The resulting binder had the following properties:
degree of substitution: 1.1
safflower FAME content: 12 mol %
polydispersity: 1.2
viscosity of a 81.5 wt % solution in ShellSol D40 solvent (from Shell): 60 dPa.s at 23 °C.

### b. Preparation and properties of paint based on Binder 3

Paint based on Binder 3 was prepared as in example 1. The paint composition is presented in Table 1. Properties of the paint have been established and are shown in Table 2.

### Example 4

### a. Preparation of Binder 4

In a suitable reactor, the following were added:
1500 pbw of N,N-dimethylacetamide;
93.7 pbw of inulin (Raftilin HP);
477.7 pbw of safflower FAME (Radia 30139, from Oleon)
15.8 pbw of potassium carbonate.

The mixture was heated at a temperature of 160-165°C under a stream of nitrogen. After 6 hours, the solvent and any remaining methanol were distilled under reduced pressure (20 Pa). The resulting product was dissolved in petroleum ether (boiling point: 40-60°C) and treated with one equivalent hydrogen peroxide (2 % aqueous solution; 1 mol per mol of monosaccharide unit) during 40 minutes at a temperature of 35°C. After cooling to 25°C the organic layer was washed several times with methanol to remove the excess of safflower FAME.

The resulting binder had the following properties:
safflower FAME content: 8 mol%
degree of substitution: 2.0
number-average molecular weight: 10 x 10³
polydispersity: 1.3
viscosity of a 82 wt% solution in ShellSol D40 solvent (from Shell): 50 dPa.s at 23°C.

### b. Preparation and properties of paint based on Binder 4

Paint based on Binder 4 was prepared as in example 1. The paint composition is shown in Table 1. Properties of the paint have been established and are presented in Table 2.

### Example 5

### a. Preparation of Binder 5

Preparation inulin linoleate

In a suitable reactor, the following were added:
3000 pbw of N,N-dimethylacetamide;
187.4 pbw of inulin (Raftilin HP);
955.4 pbw of safflower FAME (Radia 30139, from Oleon);
31.6 pbw of potassium carbonate.

The mixture was heated at a temperature of 160-165°C under a stream of nitrogen. After 6 hours, the solvent and any remaining methanol were distilled under reduced pressure (20 Pa). The resulting product was dissolved in petroleum ether (boiling point: 40-60°C) and treated with one equivalent hydrogen peroxide (2 % aqueous solution; 1 mol per mol of monosaccharide unit) during 40 minutes at a temperature of 35°C. After cooling to 25°C the organic layer was washed several times with methanol to remove the excess of safflower FAME.

The resulting binder had the following properties:
safflower FAME content: 4 mol%
degree of substitution: about 2.2
polydispersity: 1.2
number-average molecular weight: 10 x 10³

### Preparation of inulin acetate linoleate

In a suitable reactor, the following were added:
937 pbw of N,N-dimethylacetamide;
752 pbw of inulin linoleate
233 pbw of sodium acetate

To the resulting mixture was added a mixture of 556 pbw acetic anhydride and 468 pbw of N,N-dimethylacetamide at a temperature of 70-75°C over a period of about 30 minutes (under a stream of nitrogen). Heating and stirring was continued for an additional period of 4 hours. Thereupon the solvent, the excess of acetic anhydride and acetic acid were distilled off under reduced pressure (20 Pa). The residue was dissolved in petroleum ether (boiling point: 40-60°C) and washed several times with methanol.

The resulting binder had the following properties:
safflower FAME content: 2.6 mol%
degree of substitution (linoleate): 1.7
degree of substitution (acetate): 1.3
polydispersity: 1.45
number-average molecular weight: 11 x 10³
viscosity of a 95 wt% solution in ShellSol D40 solvent (from Shell): 160 dPa.s at 23°C.

### b. Preparation and properties of paint based on Binder 5

Paint based on Binder 5 was prepared as in example 1. The paint composition is shown in Table 1. Properties of the paint have been established and are presented in Table 2. Gloss retention upon QUV-A weathering was comparable to the performance of a commercial available gloss paint based on non-renewable materials, which was examined as comparative formulation. The gloss readings vs exposition time is demonstrated in Table 3.

### Example 6

### a. Preparation of the Binder 6

### Preparation inulin linoleate

In a suitable reactor, the following were added:
3300 pbw of N,N-dimethylacetamide;
300 pbw of inulin (Raftilin HP);
1096 pbw of safflower FAME (Radia 30139, from Oleon);
52.5 pbw of potassium carbonate.

The mixture was heated at a temperature of 160-165°C under a stream of nitrogen. After 6 hours, the solvent and any remaining methanol were distilled under reduced pressure (20 Pa). The resulting product was dissolved in petroleum ether (boiling point: 40-60°C) and treated with one equivalent hydrogen peroxide (2 % aqueous solution; 1 mol per mol of monosaccharide unit) during 40 minutes at a temperature of 35°C. After cooling to 25°C the organic layer was washed several times with methanol to remove the excess of safflower FAME.

The resulting binder had the following properties:
safflower FAME content: 26 mol%
degree of substitution: about 1.4

### Preparation of inulin acetate linoleate

In a suitable reactor, the following were added:
937 pbw of N,N-dimethylacetamide;
1005 pbw of inulin linoleate
369 pbw of sodium acetate.

To the resulting mixture was added a mixture of 918 pbw acetic anhydride and 468 pbw of N,N-dimethylacetamide at a temperature of 70-75°C over a period of about 30 minutes (under a stream of nitrogen). Heating and stirring was continued for an additional period of 4 hours. Thereupon the solvent, the excess of acetic anhydride and acetic acid were distilled off under reduced pressure (20 Pa). The residue was dissolved in petroleum ether (boiling point: 40-60°C) and washed several times with methanol.

The resulting binder had the following properties:
safflower FAME content: 10 mol%
degree of substitution (linoleate): 1.0
degree of substitution (acetate): 2.0
polydispersity: 1.6
number-average molecular weight: 10 x 10³
viscosity of a 90 wt% solution in ShellSol D40 solvent (from Shell): 234 dPa.s at 23°C.

### b. Preparation and properties of paint based on Binder 6

Paint based on Binder 6 was prepared as in example 1. The paint composition is shown in Table 1. Properties of the paint have been established and are presented in Table 2. Gloss retention upon QUV-A weathering was comparable to the performance of a commercial available gloss paint based on non-renewable materials, which was examined as comparative formulation. The gloss readings *vs* exposition time is demonstrated in Table 3.

### Example 7

### a. Preparation of Binder 7

### Preparation inulin linoleate

In a suitable reactor, the following were added:
3000 pbw of N,N-dimethylacetamide;
187.4 pbw of inulin (Raftilin LS);
955.4 pbw of safflower FAME (Radia 30139, from Oleon);
31.6 pbw of potassium carbonate.

The mixture was heated at a temperature of 160-165°C under a stream of nitrogen. After 6 hours, the solvent and any remaining methanol were distilled under reduced pressure (20 Pa). The resulting product was dissolved in petroleum ether (boiling point: 40-60°C) and treated with one equivalent hydrogen peroxide (2 % aqueous solution; 1 mol per mol of monosaccharide unit) during 40 minutes at a temperature of 35°C. After cooling to 25°C the organic layer was washed several times with methanol to remove the excess of safflower FAME.

The resulting binder had the following properties:
safflower FAME content: 15 mol%
degree of substitution: about 2.0

### Preparation of inulin acetate linoleate

In a suitable reactor, the following were added:
2050 pbw of N,N-dimethylacetamide;
1206 pbw of inulin linoleate
7.3 pbw of sodium acetate.

To the resulting mixture was added a mixture of 236 pbw acetic anhydride and 225 pbw of N,N-dimethylacetamide at a temperature of 70-75°C over a period of about 30 minutes (under a stream of nitrogen). Heating and stirring was continued for an additional period of 4 hours. Thereupon the solvent, the excess of acetic anhydride and acetic acid was distilled off under reduced pressure (20 Pa). The residue was dissolved in petroleum ether (boiling point: 40-60°C) and washed several times with methanol.

The resulting binder had the following properties:
safflower FAME content: 10 mol%
degree of substitution (linoleate): 1.75
degree of substitution (acetate): 1.25
polydispersity: 1.4
number-average molecular weight:6.7 x 10³
viscosity: 44 dPa.s at 23°C.

### b. Preparation and properties of paint based on Binder 7

Paint based on Binder 7 was prepared as in example 1. The paint composition is shown in Table 1. Properties of the paint have been established and are presented in Table 2. Gloss retention upon QUV-A weathering was comparable to the performance of a commercial available gloss paint based on non-renewable materials, which was examined as comparative formulation.

All these examples demonstrate that it is possible to make a commercially acceptable paint on the basis of inulin and drying oil as renewable materials.

### Example 8: For comparison purposes, a dextrine linoleate ester was prepared.

In a suitable reactor, the following were added:
375 pbw of N,N-dimethylacetamide;
100 pbw of pyridine;
36 pbw of dextrine (Paselli 10);
1 pbw of 4-dimethylaminopyridine (DMAP).

To the resulting mixture were added over a period of 10 minutes 215 pbw of linoleoyl chloride - prepared from linoleic acid in the usual way - at a temperature of 50 - 60 °C under a stream of nitrogen. The temperature was increased to 95 - 100 °C and heating and stirring were continued for a period of 8.5 hours.

After cooling the resulting product was dissolved in petroleum ether (boiling point: 40-60°C) and washed consecutively with water, an aqueous sodium hydroxide solution (1 N), water, a 1/1 (w/w) mixture of water and acetic acid, water and methanol.

The resulting dextrin ester obtained after evaporation of the volatiles in vacuo had the following properties:
number-average molecular weight: 7.0 x 10³
polydispersity: 9.6
hydroxyl value: 2.6
viscosity of a 80 wt% solution in ShellSol D40 solvent (from Shell): 83 dPa.s at -23°C.

**Table 1:**

| **coating compositions and characteristics of the wet formulations** | | | | | | | |
|---|---|---|---|---|---|---|---|
| | Paint 1 | Paint 2 | Paint 3 | Paint 4 | Paint 5 | Paint 6 | Paint 7 |
| Binder 1 | 66.2 | | | | | | |
| Binder 2 | | 50.0 | | | | | |
| Binder 3 | | | 53.3 | | | | |
| Binder 4 | | | | 52.5 | | | |
| Binder 5 | | | | | 47.2 | | |
| Binder 6 | | | | | | 45.0 | |
| Binder 7 | | | | | | | 51.2 |
| Binder 8 | | | | | | | |
| solvent | 1.1 | 7.6 | 3.1 | 5.1 | 10.4 | 12.5 | 6.4 |
| wetting agent | 0.5 | 0.7 | 0.7 | 0.7 | 1.0 | 1.0 | 0.7 |
| TiO₂ | 26.7 | 36.0 | 36.9 | 36.4 | 35.4 | 36.0 | 35.5 |
| anti-skinning agent | 0.9 | 0.8 | 0.8 | 0.8 | 0.8 | 0.8 | 0.8 |
| Ca-5 | 3.2 | 3.4 | 3.6 | 3.0 | 3.6 | 3.2 | 3.6 |
| Zr-18 | 1.1 | 1.2 | 1.3 | 1.2 | 1.3 | 1.1 | 1.4 |
| Co-10 | 0.3 | 0.3 | 0.4 | 0.3 | 0.4 | 0.3 | 0.4 |
| Total | 100.0 | 100.0 | 100.0 | 100.0 | 100.0 | 100.0 | 100.0 |
| Viscosity paint (dPa.s) | 7.4 | 10.0 | 7.8 | 6.8 | 12.8 | 12.2 | 11.0 |
| Cone & plate viscosity (dPa.s) | 3.2 | 3.2 | 5.0 | 4.7 | > 10 | > 10 | 8.3 |
| Solids content (wt%) | 69.4 | 81.7 | 83.7 | 82.5 | 83.9 | 80.1 | 90.2 |
| VOC (g/L) | 359 | 240 | 212 | 226 | 210 | 261 | 134 |

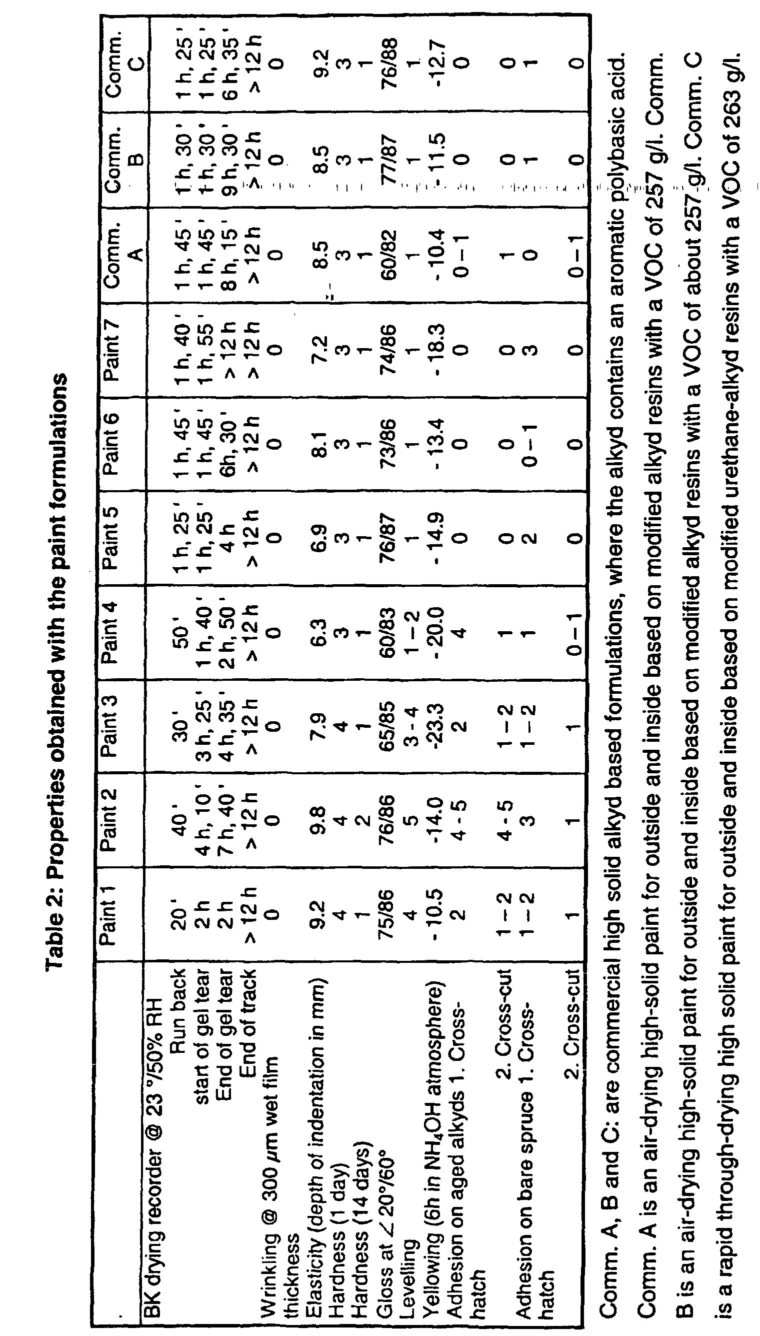

**Table 3:**

| **Gloss retention upon QUV-A weathering** | | | | |
|---|---|---|---|---|
| | Paint 5 | Paint 6 | Comm.B | Comm.C |
| Initial | 80.7 | 81.4 | 81.6 | 82.5 |
| 1 week | 67.3 | 68.4 | 65.2 | 69.2 |
| 2 weeks | 64.4 | 66.2 | 61.2 | 68.0 |
| 3 weeks | 62.8 | 63.2 | 58.7 | 64.3 |
| 4 weeks | 61.5 | 62.2 | 53.1 | 62.2 |
| 6 weeks | 60.7 | 61.5 | 54.1 | 63.6 |

From table 2 and 3, the following observations can be made:

The binders according to the invention, lacking aromatic backbone, display properties equivalent to the conventional and commercial high-solid alkyd paints.

It is surprising that equivalent hardness can be obtained by the use of the binders according to the invention (example 1-7, inulin esters containing non-aromatic polybasic acids). Indeed, it is known and accepted in the literature that the hardness results from the presence of polybasic aromatic acids like phthalic anhydride/acid.

Moreover, it was found that drying fatty esters of dextrines as in example 8, could not be prepared by the methods according to the invention.

## Claims

1. Polyester obtainable by transesterification of:
(i) inulin and
(ii) C₁₋₆ alkyl ester of unsaturated fatty acids,
or by interesterification of:
(i) inulin acyl ester, and
(ii) a drying oil, or a semi-drying oil
wherein inulin is of general formula G(F)n, wherein G represents a glucose moiety, F represents a fructose moiety, and n is at least 2.

2. Polyester according to claim 1, wherein said polyester has a degree of substitution ranging from 0.2 to 3.0.

3. Polyester according to claim 1 or 2, wherein inulin or an acyl ester thereof has a polydispersity lower than 2.

4. Polyester according to any of claims 1 to 3, wherein said drying oils or semi-drying oils consist of unsaturated fatty acids having an iodine number of at least 100.

5. Polyester according to claim 4, wherein said unsaturated fatty adds have an iodine number ranging between 100 and 140.

6. Method for the preparation of a polyester according to any of claims 1 to 5, comprising the step of transesterification of:
(i) inulin and
(ii) C₁₋₆ alkyl ester of unsaturated fatty acids,
or interesterification of:
(i) inulin acyl ester, and
(ii) a drying oil, or a semi-drying oil
wherein inulin is of general formula G(F)n, wherein G represents a glucose moiety, F represents a fructose moiety, and n is at least 2.

7. Method according to claim 6 for the preparation of a polyester, comprising the step of interesterification of:
(i) an acyl ester of inulin of general formula G(F)n wherein G represents a glucose moiety, F represents a fructose moiety and n is at least 2, and
(ii) a drying oil, or a semi-drying oil.

8. Method according to claim 6 for the preparation of a polyester, comprising the step of transesterification of:
(i) inulin of general formula G(F)n wherein G represents a glucose moiety, F represents a fructose moiety and n is at least 2, and
(ii) C₁₋₆ alkyl ester of unsaturated fatty acids.

9. Method according to any of claims 6 or 8, wherein said inulin is acylated prior to reaction with a drying oil, a semi-drying oil or derived alkyl esters thereof.

10. Method according to any of claims 6 or 8, wherein the free hydroxyl groups of the formed polyesters are acylated.

11. Method according to any of claims 6 to 10, carried out in the presence of a polar aprotic solvent.

12. Use of a polyester according to any of claims 1 to 5 as a binder in paints.

13. Use of a polyester according to any of claims 1 to 5 as a binder in varnishes.

14. Paint or varnish composition comprising as a binder a polyester according to any of claims 1 to 5 and at least one drier.

## Patentansprüche

1. Polyester, erhältlich durch Umesterung von:
(i) Inulin und
(ii) einem C₁₋₆-Alkylester von ungesättigten Fettsäuren
oder durch Umesterung von
(i) einem Inulin-Acylester und
(ii) einem Trockenöl oder Halb-Trockenöl,
wobei Inulin die allgemeine Formel G(F)n aufweist, in der G eine Glukoseeinheit, F eine Fruktoseeinheit und n mindestens 2 darstellen.

2. Der Polyester nach Anspruch 1, wobei der Polyester einen Substitutionsgrad im Bereich von 0,2 bis 3,0 aufweist.

3. Der Polyester nach Anspruch 1 oder 2, wobei Inulin oder einer seiner Acylester eine Polydispersität von weniger als 2 aufweist.

4. Der Polyester nach einem der Ansprüche 1 bis 3, wobei die Trockenöle oder Halb-Trockenöle aus ungesättigten Fettsäuren mit einer Jodzahl von mindestens 100 bestehen.

5. Der Polyester nach Anspruch 4, wobei die ungesättigten Fettsäuren eine Jodzahl im Bereich zwischen 100 und 140 aufweisen.

6. Verfahren zur Herstellung eines Polyesters nach einem der Ansprüche 1 bis 5, wobei das Verfahren den Schritt der Umesterung von
(i) Inulin und
(ii) einem C₁₋₆-Alkylester von ungesättigten Fettsäuren
oder durch Umesterung von
(i) einem Inulin-Acylester und
(ii) einem Trockenöl oder Halb-Trockenöl,
wobei Inulin die allgemeine Formel G(F)n aufweist, in der G eine Glukoseeinheit, F eine Fruktoseeinheit und n mindestens 2 darstellen, umfasst.

7. Das Verfahren nach Anspruch 6 zur Herstellung eines Polyesters, wobei das Verfahren den Schritt der Umesterung von
(i) einem Acylester des Inulins der allgemeinen G(F)n, wobei G eine Glukoseeinheit, F eine Fruktoseeinheit und n mindestens 2 sind, und
(ii) einem Trockenöl oder einem Halb-Trockenöl, umfasst.

8. Das Verfahren nach Anspruch 6 für die Herstellung eines Polyesters, wobei das Verfahren den Schritt der Umesterung von
(i) Inulin der allgemeinen Formel G(F)n, wobei G eine Glukoseeinheit, F eine Fruktoseeinheit und n mindestens 2 sind, und
(ii) einem C₁₋₆-Alkylester einer ungesättigten Fettsäure, umfasst.

9. Das Verfahren nach einem der Ansprüche 6 oder 8, wobei das Inulin vor der Reaktion mit einem Trockenöl, einem Halb-Trockenöl oder davon abgeleiteten Alkylestern acyliert wird.

10. Das Verfahren nach einem der Ansprüche 6 oder 8, wobei die freien Hydroxyl-Gruppen der gebildeten Polyester acyliert werden.

11. Das Verfahren nach einem der Ansprüche 6 bis 10, wobei das Verfahren in Gegenwart eines polaren aprotischen Lösungsmittels durchgeführt wird.

12. Verwendung eines Polyesters nach einem der Ansprüche 1 bis 5 als Bindemittel in Farben.

13. Verwendung eines Polyesters nach einem der Ansprüche 1 bis 5 als Bindemittel in Lacken.

14. Farb- oder Lack-Zusammensetzung, umfassend als ein Bindemittel ein Polyester nach einem der Ansprüche 1 bis 5 und mindestens ein Trockenmittel.

## Revendications

1. Polyester susceptible d'être obtenu par transestérification
(i) d'inuline et
(ii) d'esters alkyliques en C₁₋₆ d'acides gras insaturés,
ou par interestérification
(i) d'un ester d'acyle d'inuline et
(ii) d'une huile siccative ou semi-siccative,
dans lequel l'inuline est de formule générale G(F), dans laquelle G représente un groupe glucose, F représente un groupe fructose et n est au moins 2.

2. Polyester selon la revendication 1, dans lequel ledit polyester a un degré de substitution compris entre 0,2 et 3,0.

3. Polyester selon la revendication 1 ou 2, dans lequel l'inuline ou l'ester d'acyle de celle-ci a une polydispersité inférieure à 2.

4. Polyester selon l'une quelconque des revendications 1 à 3, dans lequel lesdites huiles siccatives ou semi-siccatives consistent d'acides gras insaturés ayant un indice d'iode d'au moins 100.

5. Polyester selon la revendication 4, dans lequel lesdits acides gras insturés ont un indice d'iode compris entre 100 et 140.

6. Procédé pour la préparation d'un polyester selon l'une quelconque des revendications 1 à 5, comprenant l'étape de transestérification
(i) d'inuline et
(ii) d'esters alkyliques en C₁₋₆ d'acides gras insaturés,
ou d'interestérification
(i) d'un ester d'acyle d'inuline et
(ii) d'une huile semi-siccative ou siccative
dans lequel l'inuline est de formule générale G(F), dans laquelle G représente un groupe glucose, F représente un groupe fructose et n est au moins 2.

7. Procédé selon la revendication 6 pour la préparation d'un polyester, comprenant l'étape d'interestérification
(i) d'un ester d'acyle d'inuline de formule générale G(F), dans laquelle G représente un groupe glucose, F représente un groupe fructose et n est au moins 2, et
(ii) d'une huile siccative ou semi-siccative.

8. Procédé selon la revendication 6 pour la préparation d'un polyester, comprenant l'étape de transestérification
(i) d'inuline de formule générale G(F), dans laquelle G représente un groupe glucose, F représente un groupe fructose et n est au moins 2, et
(ii) d'esters alkyliques en C₁₋₆ d'acides gras insaturés.

9. Procédé selon l'une quelconque des revendications 6 ou 8, dans lequel ladite inuline est acétylée avant réaction avec une huile siccative ou semi-siccative ou avec les esters alkyliques dérivés de celle-ci.

10. Procédé selon l'une quelconque des revendications 6 ou 8, dans lequel les groupes hydroxyles libres des polyesters formés sont acétylés.

11. Procédé selon l'une quelconque des revendications 6 ou 8, effectué en présence d'un solvant polaire aprotique.

12. Utilisation d'un polyester selon l'une quelconque des revendications 1 à 5, comme liant dans des peintures.

13. Utilisation d'un polyester selon l'une quelconque des revendications 1 à 5, comme liant dans des vernis.

14. Composition de peinture ou de vernis comprenant un polyester selon l'une quelconque des revendications 1 à 5 comme liant et au moins un siccative.
